# EUROPÄISCHE PATENTSCHRIFT

(11) **EP 2 830 917 B1**
(45) Veröffentlichungstag und Bekanntmachung des Hinweises auf die Patenterteilung: **27.07.2016**
(21) Anmeldenummer: 13712738.7
(22) Anmeldetag: 19.03.2013
(51) Int. Cl.: B60S 9/08

(54) **HÖHENVERSTELLBARE STÜTZVORRICHTUNG FÜR SATTELAUFLIEGER ODER DERGLEICHEN**
HEIGHT-ADJUSTABLE SUPPORT DEVICE FOR SEMI-TRAILERS OR THE LIKE
DISPOSITIF SUPPORT RÉGLABLE EN HAUTEUR POUR SEMI-REMORQUES OU SIMILAIRES

(30) Priorität: 29.03.2012 DE 102012205039
(43) Veröffentlichungstag der Anmeldung: 04.02.2015
(73) Patentinhaber: SAF-HOLLAND GmbH, 63856 Bessenbach (DE)
(72) Erfinder: RIEDL, Reinhold, 63897 Miltenberg (DE)
(74) Vertreter: Müller Schupfner & Partner Patent- und Rechtsanwaltspartnerschaft mbB
(86) Internationale Anmeldenummer: PCT/EP2013/055605
(87) Internationale Veröffentlichungsnummer: WO 2013/143907

(56) Entgegenhaltungen:
- WO-A1-2011/015467
- DE-A1- 19 616 704
- DE-A1-102005 034 554
- DE-B3-102006 035 917
- US-A- 6 099 016

## Beschreibung

Die Erfindung bezieht sich auf eine Stützvorrichtung für Sattelauflieger oder dergleichen, welche insbesondere höhenverstellbar ausgebildet ist. Derartige Stützvorrichtungen sind bevorzugt paarweise vorn an Sattelaufliegern angebracht und können zweckmäßigerweise aus- oder eingefahren, d.h. zwischen Abstütz- und Transportstellung verstellt und darüber hinaus zum Anheben des vorderen Sattelaufliegerbereichs benutzt werden, sofern das beim Aufsatteln erforderlich wird.

Stützvorrichtungen der in Rede stehenden-Art sind z. B. aus der DE 196 16 704 A1 und der DE 198 36 635 C5 bekannt. Bei diesen ist eine Spindelmutter eines Hubspindeltriebes jeweils starr an einem ausfahrbaren Innenrohr befestigt. Wenn an abgestellten Sattelaufliegern beispielsweise durch Luftverlust der Achsfederungen in Fahrzeuglängsrichtung oder bei Be- oder Entladevorgängen in Fahrzeugseitenrichtung eine Kraft bzw. Schub erfolgt, haben die Stützvorrichtungen zusätzlich zur Vertikalbelastung auch Querkräfte aufzunehmen. Es tritt dadurch im besonderen Maße eine Biegebeanspruchung der ausgefahrenen Stützeninnenrohre, deren obere Bereiche mit Führungsspiel in den am Fahrzeugchassis befestigten Stützenaußenrohren stecken, auf. Dabei besteht die Gefahr, dass sich Innen- und Außenrohr verkanten, was zu einer Biegung führt, so dass bei einer starren Verbindung der Spindelmutter mit dem Stützeninnenrohr die Spindel verbogen werden kann, was zu einer Schwergängkeit beim üblicherweise vorgesehenen Kurbelbetrieb führt bzw. die Stütze unbrauchbar macht. Die US 6,099,016 zeigte eine Sattelaufliegerstütze, bei welcher die Spindelmutter und das Stützeninnenrohr beweglich zueinander angeordnet sind und die Spindelmutter ein größeres seitliches Bewegungsspiel aufweist als das Stützeninnenrohr, wodurch eine Spindelverbiegung vermieden wird. Bei dieser Stütze ist die Stützlast über eine unterhalb der Spindelmutter im Stützeninnenrohr befestigten Platte aufgenommen.

Es ist somit Aufgabe der vorliegenden Erfindung, eine Stützvorrichtung, vorzugsweise für Nutzfahrzeuge wie Sattelauflieger, vorzusehen, bei der die Biegebelastung der Spindel im Einsatz reduziert oder vermieden wird und die geringeren Material- und Fertigungsaufwand erfordert, sowie eine einfache Montage und Demontage ermöglicht.

Diese Aufgabe wird durch eine Stützvorrichtung, vorzugsweise für Nutzfahrzeuge wie Sattelauflieger, mit den Merkmalen des Anspruchs 1 oder 13 gelöst. Bevorzugte Ausführungsformen sind Gegenstand der abhängigen Ansprüche.

Erfindungsgemäß ist eine Stützvorrichtung, vorzugsweise für Nutzfahrzeuge wie Sattelauflieger, vorgesehen, umfassend ein Stützeninnenrohr und ein Stützenaußenrohr, welche zueinander entlang einer Längsachse in Ein- bzw. Ausfahrrichtung verlagerbar sind, eine Spindel, die über einen Getriebebereich drehbar und ortsfest zu dem Stützenaußenrohr angeordnet ist, eine Spindelmutter, die auf der Spindel gelagert ist, wobei die Spindelmutter an einem Befestigungsbereich des Stützeninnenrohrs festgelegt ist, der als sich zur Längsachse weisender Tragrand ausgebildet ist. Die erfindungsgemäße Stützvorrichtung dient insbesondere zur Abstützung eines Sattelaufliegers und ist hierfür zweckmäßigerweise paarweise an einem vorderen Bereich des Sattelaufliegers bzw. dessen Rahmens festgelegt. Damit die Stützvorrichtung zwischen einer Abstütz- und einer Transportstellung verstellt werden kann, sind das Stützeninnenrohr und das Stützenaußenrohr zueinander entlang einer Längsachse verlagerbar bzw. verschiebbar bzw. ein- und ausfahrbar. Hierbei ist das Stützeninnenrohr teleskopartig in das Stützenaußenrohr einschiebbar. In der Regel ist das Stützenaußenrohr fest am Fahrzeugrahmen befestigt. Das darin verschiebbar angeordnete Stützeninnenrohr weist an dem dem Befestigungspunkt gegenüberliegenden Ende bzw. am freien Ende des Stützeninnenrohrs einen Fuß bzw. Stützfuß auf. Um eine Verlagerung von Stützeninnenrohr zu Stützenaußenrohr zu ermöglichen, ist eine Spindel vorgesehen, die vorzugsweise koaxial bzw. konzentrisch zur Längsachse der Stützvorrichtung vorgesehen ist. Die Spindel ist über einen Getriebebereich antreibbar, indem über eine Handkurbel oder einen motorbetriebenen Antrieb ein Drehmoment in eine Getriebeanordnung impliziert wird, welche das Drehmoment, vorzugsweise über eine Kegelradanordnung, an die Spindel weitergibt und diese somit dreht. In Ein- bzw. Ausfahrrichtung gesehen ist die Spindel vorteilhafterweise ortsfest zu dem Stützenaußenrohr angeordnet. In anderen Worten ist die Spindel vorteilhafterweise drehbar in dem Stützenaußenrohr festgelegt. Um die Drehbewegung der Spindel in eine Verlagerung des Stützeninnenrohres zu transformieren, ist eine Spindelmutter vorgesehen, die auf der Spindel gelagert ist. Insbesondere in einem umfänglichen Bereich der Spindelmutter ist diese an einem Befestigungsbereich des Stützeninnenrohres derart festgelegt, dass die Spindelmutter gegen Verdrehung bzw. Rotation um die Längsachse gesichert ist. Der Befestigungsbereich des Stützeninnenrohres, mittels welchem die Spindelmutter an demselben festgelegt ist, ist erfindungsgemäß als ein sich zur Längsachse der Stützvorrichtung bzw. des Innenrohrs bzw. Außenrohrs weisender Tragrand ausgebildet. In anderen Worten kann der Tragrand nach Innen weisen, das heißt die Randkontur des Tragrands weist zur Längsachse oder Symmetrieachse der Stützvorrichtung. In einer besonders vorteilhaften Weise ist der Tragrand quer, zweckmäßigerweise senkrecht, zur Längsachse ausgebildet. Es versteht sich, dass der Tragrand gleichfalls in einem Winkel zur Längsachse geneigt sein kann, beispielsweise zwischen 60° und 89°, vorzugsweise zwischen 70° und 88° und besonders bevorzugterweise zwischen 75° und 85°.

Vorzugsweise weist der Tragrand eine tragrandseitige Tragfläche auf, die gekrümmt oder gewölbt ist. Die tragrandseitige Tragfläche ist hierbei diejenige Fläche des Tragrands, welche in der Stützvorrichtung nach oben bzw. vom Stützfuß weg bzw. zum Getriebebereich hin gerichtet ist. Die tragrandseitige Tragfläche bietet ein Auflager für die Spindelmutter, sodass die vom Fahrzeug in das Stützenaußenrohr eingeleiteten Kräfte (bzw. Vertikalkräfte) über die Spindel in die Spindelmutter und von dort über die tragrandseitige Tragfläche in das Stützeninnenrohr übertragen werden können. Die tragrandseitige Tragfläche ist besonders vorteilhafterweise gekrümmt und besonders zweckmäßigerweise rund gekrümmt derart ausgebildet, dass die Krümmung zum Getriebebereich hin gerichtet ist.

Vorzugsweise ist die tragrandseitige Tragfläche daher zum Getriebebereich hin gewölbt ausgebildet, wobei eine zumindest bereichsweise sphärische Wölbung bevorzugt ist. Hierdurch wird eine Stabilisierung des oberen Endes des Stützeninnenrohres ermöglicht, sodass dessen Verhalten bei einer Biegebeanspruchung optimiert ist.

Zweckmäßigerweise weist die Spindelmutter einen Tragflansch zur Übertragung der Last auf das Stützeninnenrohr auf. Die auf die Spindelmutter wirkende Kraft wird daher über den als Tragflansch ausgebildeten Bereich auf den Tragrand des Stützeninnenrohrs übertragen. Der Tragflansch ist zweckmäßigerweise oberhalb der tragrandseitigen Tragfläche, das heißt zum Getriebebereich hin angeordnet.

Vorzugsweise ist der Tragrand - in Ein- bzw. Ausfahrrichtung gesehen - zwischen dem Tragrandflansch und zumindest einem Verhakungsbereich der Spindelmutter angeordnet, welcher sich radial von der Längsachse weg erstreckt. Besonders vorteilhafterweise sind zwei gegenüberliegend angeordnete radial abstehende Verhakungsbereiche vorgesehen. Es ist auch möglich eine andere Vielzahl von radial abstehenden Verhakungsbereichen vorzusehen. Die Abstände der Verhakungsbereiche zum Tragflansch in Ein- bzw. Ausfahrrichtung sind größer als die Stärke des Tragrands, damit dieser vorteilhaft einfach darin festgelegt werden kann. Weiterhin zweckmäßigerweise erstreckt sich der Tragflansch in radialer Richtung weiter nach außen als der jeweilige Verstärkungs- bzw. Verhakungsbereich.

Vorteilhafterweise weist der Tragflansch eine flanschseitige Tragfläche auf, die zumindest bereichsweise formkongruent zu einer tragrandseitigen Tragfläche ausgebildet ist. Die die Unterseite des Tragflanschs ausbildende flanschseitige Tragfläche ist somit diejenige Fläche, die mit der tragrandseitigen Tragfläche kontaktiert bzw. in Eingriff gelangt bzw. über welche die Kraft auf das Stützeninnenrohr übertragen wird. Um eine optimale Kraftübertragung zu gewährleisten, sind die tragrandseitige Tragfläche und die flanschseitige Tragfläche zumindest bereichsweise formkongruent ausgebildet, das heißt sie weisen bei einer gewölbten Oberflächengeometrie im Wesentlichen denselben Krümmungswinkel auf.

Bevorzugterweise sind das Stützeninnenrohr, insbesondere im Bereich dessen Tragrands, und die Spindelmutter relativ zueinander und quer zur Längsachse verlagerbar. In anderen Worten ist es möglich, das Stützeninnenrohr im Bereich von dessen Tragrand quer zur Rotationsachse der Spindelmutter zu bewegen, um eine mögliche Biegebeanspruchung auf die Spindel zu reduzieren. Hierfür ist ein radialer Abstand zwischen der Tragrandkontur und der Spindelmutter vorgesehen.

Weiterhin bevorzugt sind das Stützenaußenrohr und die Spindelmutter relativ zueinander und quer zur Längsachse verlagerbar. Es ist somit bevorzugterweise ein radialer Freiraum zwischen der Spindelmutter und dem Stützenaußenrohr vorgesehen.

In einer besonders bevorzugten Ausführungsform ist die lichte Weite zwischen dem Stützeninnenrohr und dem Stützenaußenrohr kleiner als ein maximaler Verlagerungsweg quer zur Längsachse zwischen Spindelmutter und Stützeninnenrohr und/oder zwischen Spindelmutter und Stützenaußenrohr. Die lichte Weite zwischen dem Stützeninnenrohr und dem Stützenaußenrohr ist letztlich der Spalt zwischen diesen beiden Elementen. Dieser Spalt ist vorteilhafterweise kleiner als ein maximaler Verlagerungsweg quer zur Längsachse zwischen der Spindelmutter und dem Stützeninnenrohr. In anderen Worten ist dieser Spalt kleiner als ein radialer Abstand bzw. Freiraum zwischen der Tragrandkontur und der Spindelmutter. In entsprechender Art und Weise ist die lichte Weite zwischen Stützeninnenrohr und Stützenaußenrohr ebenfalls kleiner als der radiale Freiraum zwischen Spindelmutter und Stützenaußenrohr.

In einer vorteilhaften Ausführungsform ist der Tragrand einstückig mit dem Stützeninnenrohr ausgebildet. Der Tragrand kann somit aus den oberen Wandbereichen des Stützeninnenrohres entsprechend umgeformt werden.

In einer alternativen Ausführungsform kann der Tragrand mehrteilig mit dem Stützeninnenrohr ausgebildet sein. Hierbei kann der Tragrand ein separates, auf das Stützeninnenrohr aufgesetztes Element sein, welches vorzugsweise mit dem Stützeninnenrohr fixiert ist.

In einer bevorzugten Ausführungsform weist der Tragrand eine eine Tragrandkontur ausbildende Öffnung auf, die geeignet ist, die Spindel zumindest bereichsweise aufzunehmen, wobei der radiale Abstand der Tragrandkontur zur Längsachse nicht konstant ausgebildet ist. Die Tragrandkontur ist somit die Öffnung bzw. Mündung des Tragrands und bildet somit einen sich um die Längsachse umfänglich erstreckenden Rand aus, in welchen die Spindel eintauchen kann. In einer senkrecht zur Längsachse gesehenen Ebene kann die Tragrandkontur einen kreisförmigen Querschnitt aufweisen. Es ist jedoch bevorzugt, dass die Tragrandkontur einen Querschnitt aufweist, der nicht konstant ausgebildet ist, das heißt dessen Abstand zur Längsachse in verschiedenen Bereichen verschieden groß ist. Eine bevorzugte geometrische Form ist ein ungleichmäßiges Achteck mit zwei oder drei verschieden langen gegenüberliegenden Seitenflächenpaaren.

Weiterhin erfindungsgemäß ist die Stützvorrichtung herstellbar oder hergestellt durch
- Bereitstellen eines Stützeninnenrohres und eines Stützenaußenrohres, welche zueinander entlang einer Längsachse in Ein- bzw. Ausfahrrichtung verlagerbar sind, wobei das Stützeninnenrohr einen als zur Längsachse weisenden Tragrand ausgebildeten Befestigungsbereich zur Festlegung der Spindelmutter aufweist,
- Bereitstellen einer Spindel und einer Spindelmutter, die auf der Spindel gelagert ist, wobei die Spindelmutter zumindest einen Verhakungsbereich aufweist, welcher sich quer bzw. radial von der Längsachse weg erstreckt,
- Orientieren der Spindelmutter derart zu dem Stützeninnenrohr, dass der Verhakungsbereich in radialer Richtung zur Längsachse am weitesten von der Tragrandköntur des Tragrands angeordnet ist
- Anordnen der Spindelmutter in dem Stützeninnenrohr derart, dass bei einer Rotation der Spindelmutter zu dem Stützeninnenrohr der Verhakungsbereich mit dem Tragrand in Eingriff gelangt, insbesondere unter dem Tragrand angeordnet ist bzw. in Richtung der Längsachse mit dem Tragrand fluchtet.

Weitere Vorteile und Merkmale der Erfindung ergeben sich aus der nachfolgenden Beschreibung einer bevorzugten Ausführungsform mit Bezug auf die beigefügten Figuren. Es zeigen:
- **Fig.1**: eine Vorderansicht einer bevorzugten Ausführungsform der erfindungsgemäßen Stützvorrichtung,
- **Fig.2**: eine Seitenansicht der in Fig.1 gezeigten Stützvorrichtung,
- **Fig.3**: einen Längsschnitt der in Fig.2 gezeigten Stützvorrichtung entlang der Linie A-A,
- **Fig.4**: einen Querschnitt der in Fig.1 gezeigten Stützvorrichtung entlang der Linie B-B.

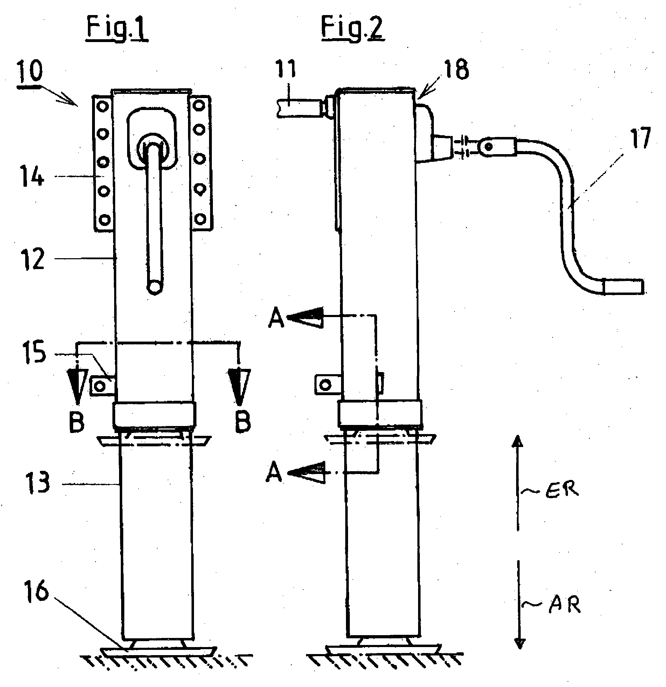

Die in **Fig.1** bis **4** gezeigte Stütze bzw. Stützvorrichtung 10 wird als Paar an einem Sattelauflieger eingesetzt, wobei die Stützvorrichtungen 10 antriebsmäßig mittels einer Verbindungswelle 11 verbunden sind. In Transportstellung sind die Stützen eingefahren, d.h. in verkürztem Zustand. Bevor der Sattelauflieger vom Sattelschlepper abgekoppelt werden kann, müssen die Stützvorrichtungen 10 ausgefahren werden, um den Sattelauflieger abzustützen. Die Stützvorrichtung 10 weist ein Stützenaußenrohr 12 und ein darin in Einfahrrichtung ER und Ausfahrrichtung AR längsverschiebbar angeordnetes Stützeninnenrohr 13 auf. Das Stützenaußenrohr 12 und das Stützeninnenrohr 13 besitzen zweckmäßigerweise quadratische Querschnitte. Die Stützvorrichtung 10 wird über eine am Stützenaußenrohr 12 befindliche Anschraubplatte 14 und Strebenlaschen 15 am Chassis des Sattelaufliegers befestigt und verstrebt. Am unteren Ende des Stützeninnenrohres 13 befindet sich ein Fuß 16 zum Aufsetzen auf den Boden. Der Antrieb der Stütze erfolgt mittels einer Handkubel 17 über einen Getriebebereich 18.

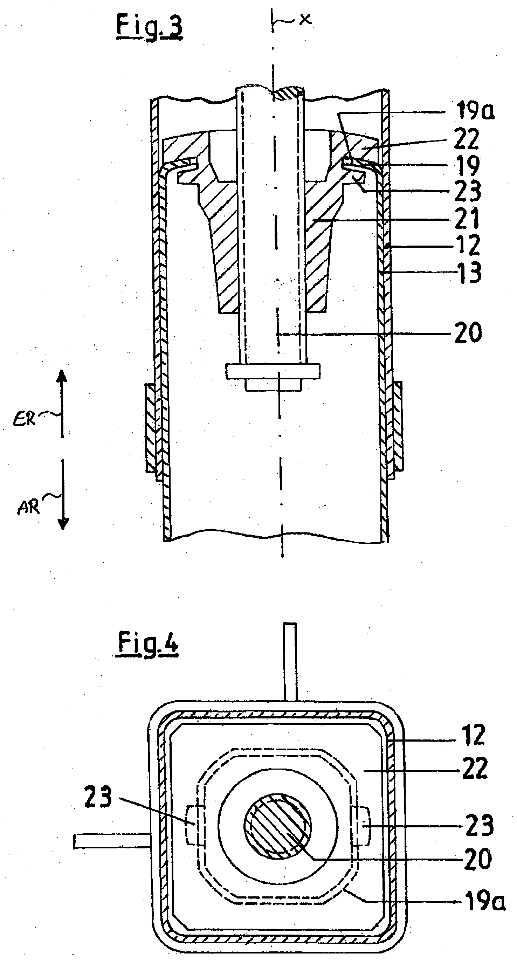

Wie **Fig. 3** zeigt besitzt das Stützeninnenrohr 13 am oberen Bereich einen nach innen weisenden Tragrand 19. Der Tragrand 19 mit einer inneren Tragrandkontur 19a entspricht in seiner Form dem Teilbereich einer konvexen, vorzugsweise sphärischen Wölbung, die zum Getriebebereich 18 hin gerichtet bzw. gewölbt ist. Die innere Tragrandkontur 19a des Tragrandes 19 ist derart gestaltet, dass sie in unterschiedlichen Abständen zur Symmetrieachse oder Längsachse x des Stützeninnenrohres 13 verläuft. Dem Getriebebereich 18 nachgeordnet ist eine Spindel 20, die mit einer Spindelmutter 21 in Eingriff steht. Die Spindelmutter 21 weist einen Tragflansch 22 auf, der im gezeigten Belastungsfall der Stütze 10 auf dem Tragrand 19 des Stützeninnenrohres 13 sitzt, wozu er auf der Unterseite bzw. flanschseitige Tragfläche kongruent zur tragrandseitige Tragfläche des Tragrands 19 geformt ist.

An der Spindelmutter 21 befinden sich unterhalb ihres Tragflansches 22 und etwas mehr als die Wandstärke des Tragrandes 19 vom Tragflansch 22 entfernt, in gegenüberliegender Anordnung zwei radial abstehende Verhakungsbereiche 23. Die Montage der Spindelmutter 21 mit eingeschraubter Spindel 20 erfolgt in einfacher Weise. Dazu wird die Spindelmutter 21 in einer Stellung bei der ihre Verhakungsbereiche 23 an den am weitesten von der der Symmetrieachse oder Längsachse x des Stützeninnenrohres 13 entfernten Bereichen der Tragrandkontur 19a des Tragrandes 19 stehen in das Stützeninnenrohr 13 eingesetzt und um 45° gedreht. Dabei schwenken die Verhakungsbereiche 23 unter den Tragrand 19. Im unbelasteten Zustand der Stütze 10 liegt der Tragrand 19 auf den Verhakungsbereichen 23 auf und das Stützeninnenrohr 13 und der Fuß 16 werden von den Verhakungsbereichen 23 getragen, so dass diese Teile nicht absinken bzw. in Transportstellung verloren gehen können.

Die Demontage der Spindelmutter 21 und Spindel 20 erfolgt umgekehrt wie die vorstehend beschriebene Montage. Daher ist ein Austausch einer defekten Spindelmutter 21 bzw. Spindel 20 leicht zu bewerkstelligen.

### Bezugszeichenliste

- 10: Stütze
- 11: Verbindungswelle
- 12: Stützenaußenrohr
- 13: Stützeninnenrohr
- 14: Anschraubplatte
- 15: Strebenlasche
- 16: Fuß
- 17: Handkurbel
- 18: Getriebebereich
- 19: Tragrand
- 19a: Tragrandkontur
- 20: Spindel
- 21: Spindelmutter
- 22: Tragflansch
- 23: Verhakungsbereich
- x: Längsachse
- ER: Einfahrrichtung
- AR: Ausfahrrichtung

## Patentansprüche

1. Stützvorrichtung, vorzugsweise für Nutzfahrzeuge wie Sattelauflieger, umfassend ein Stützeninnenrohr (13) und ein Stützenaußenrohr (12), welche zueinander entlang einer Längsachse (x) in Ein- bzw. Ausfahrrichtung (ER / AR) verlagerbar sind, eine Spindel (20), die über einen Getriebebereich (18) drehbar und ortsfest zu dem Stützenaußenrohr (12) angeordnet ist, und eine Spindelmutter (21), die auf der Spindel (20) gelagert ist, wobei die Spindelmutter (21) an einem Befestigungsbereich des Stützeninnenrohres (13) festgelegt ist, der als sich zur Längsachse (x) weisender Tragrand (19) ausgebildet ist, **dadurch gekennzeichnet, dass** der Tragrand (19) eine tragrandseitige Tragfläche aufweist, die gekrümmt oder gewölbt ist.

2. Stützvorrichtung nach Anspruch 1, wobei die Krümmung der tragrandseitigen Tragfläche zum Getriebebereich (18) hin gerichtet ist und die Krümmung vorzugsweise zumindest bereichsweise als sphärische Wölbung ausgebildet ist.

3. Stützvorrichtung nach einem der vorhergehenden Ansprüche, wobei die Spindelmutter (20) einen Tragflansch (22) zur Übertragung der Last auf das Stützeninnenrohr (13) aufweist, welcher vorzugsweise oberhalb der tragrandseitige Tragfläche angeordnet ist.

4. Stützvorrichtung nach Anspruch 3, wobei der Tragrand (19) zwischen dem Tragflansch (22) und zumindest einem Verhakungsbereich (23) der Spindelmutter (21) angeordnet ist, welcher sich quer bzw. radial von der Längsachse (x) weg erstreckt.

5. Stützvorrichtung nach einem der Ansprüche 3 oder 4, wobei der Tragflansch (22) eine flanschseitige Tragfläche aufweist, die zumindest bereichsweise formkongruent zu einer tragrandseitigen Tragfläche ausgebildet ist.

6. Stützvorrichtung nach einem der vorhergehenden Ansprüche, wobei das Stützeninnenrohr (13), insbesondere im Bereich dessen Tragrand (19), und die Spindelmutter (21) relativ zueinander und quer zur Längsachse (x) verlagerbar sind.

7. Stützvorrichtung nach einem der vorhergehenden Ansprüche, wobei das Stützenaußenrohr (12) und die Spindelmutter (21) relativ zueinander und quer zur Längsachse (x) verlagerbar sind.

8. Stützvorrichtung nach einem der vorhergehenden Ansprüche, wobei die lichte Weite zwischen dem Stützeninnenrohr (13) und dem Stützenaußenrohr (12) kleiner ist als ein maximaler Verlagerungsweg quer zur Längsachse (x) zwischen Spindelmutter (21) und Stützeninnenrohr (13) und/oder zwischen Spindelmutter (21) und Stützenaußenrohr (12).

9. Stützvorrichtung nach einem der vorhergehenden Ansprüche, wobei der Tragrand (19) einstückig mit dem Stützeninnenrohr (13) ausgebildet ist, und wobei der Tragrand (19) vorzugsweise aus oberen Wandbereichen des Stützeninnenrohres (13) umgeformt ist.

10. Stützvorrichtung nach einem der Ansprüche 1 - 8, wobei der Tragrand (19) mehrteilig mit dem Stützeninnenrohr (13) ausgebildet ist und vorzugsweise ein separates, auf das Stützeninnenrohr (13) aufsetzbares Element ist.

11. Stützvorrichtung nach einem der vorhergehenden Ansprüche, wobei der Tragrand (19) eine eine Tragrandkontur (19a) ausbildende Öffnung aufweist, die geeignet ist, die Spindel (20) zumindest bereichsweise aufzunehmen, und wobei der radiale Abstand der Tragrandkontur (19a) zur Längsachse (x) nicht konstant ausgebildet ist.

12. Stützvorrichtung nach einem der vorhergehenden Ansprüche, wobei der Tragrand zumindest bereichsweise zur Längsachse (x) geneigt ausgebildet ist, und wobei die Neigung vorzugsweise zwischen 60° bis 89° ist.

13. Verfahren zum Herstelle einer Stützvorrichtung, vorzugsweise für Nutzfahrzeuge wie Sattelauflieger, **gekennzeichnet durch**
- Bereitstellen eines Stützeninnenrohres (13) und eines Stützenaußenrohres (12), welche zueinander entlang einer Längsachse (x) in Ein- bzw. Ausfahrrichtung (ER / AR) verlagerbar sind, wobei das Stützeninnenrohr (13) einen als zur Längsachse (x) weisenden Tragrand (19) ausgebildeten Befestigungshereich zur Festlegung der Spindelmutter (21) aufweist,
- Bereitstellen einer Spindel (20) und einer Spindelmutter (21), die auf der Spindel (20) gelagert ist, wobei die Spindelmutter (21) zumindest einen Verhakungsbereich (23) aufweist, welcher sich quer bzw. radial von der Längsachse (x) weg erstreckt,
- Orientieren der Spindelmutter (21) derart zu dem Stützeninnenrohr (13), dass der Verhakungsbereich (23) in radialer Richtung zur Längsachse (x) am weitesten von der Tragrandkontur (19a) des Tragrands (19) angeordnet ist
- Anordnen der Spindelmutter (21) in dem Stützeninnenrohr (13) derart, dass bei einer Rotation der Spindelmutter (21) zu dem Stützeninnenrohr (13) der Verhakungsbereich (23) mit dem Tragrand (19) in Eingriff gelangt, insbesondere unter dem Tragrand (19) angeordnet ist bzw. in Richtung der Längsachse (x) mit dem Tragrand (19) fluchtet.

## Claims

1. Supporting apparatus, preferably for commercial vehicles such as semitrailers, comprising an inner support tube (13) and an outer support tube (12), which can be displaced in relation to one another along a longitudinal axis (x) in a direction of retraction and a direction of extension (ER/AR), also comprising a spindle (20), which is arranged at a fixed location, but so as to be capable of rotation, in relation to the outer support tube (12) via a gear-mechanism region (18), and further comprising a spindle nut (21), which is mounted on the spindle (20), wherein the spindle nut (21) is secured on a fastening region of the inner support tube (13), said fastening region being designed in the form of a carrying periphery (19) which is oriented towards the longitudinal axis (x), **characterized in that** the carrying periphery (19) has a carrying surface which is curved or shaped convexly.

2. Supporting apparatus according to Claim 1, wherein the curvature of the carrying surface on the carrying periphery is directed towards the gear-mechanism region (18) and the curvature is designed, preferably at least in certain regions, in the form of spherical convex shaping.

3. Supporting apparatus according to either of the preceding claims, wherein the spindle nut (20) has a carrying flange (22) for transmitting the load to the inner support tube (13), said carrying flange being arranged preferably above the carrying surface on the carrying periphery.

4. Supporting apparatus according to Claim 3, wherein the carrying periphery (19) is arranged between the carrying flange (22) and at least one interlocking region (23) of the spindle nut (21), said interlocking region extending transversely or radially away from the longitudinal axis (x).

5. Supporting apparatus according to either of Claims 3 and 4, wherein the carrying flange (22) has a carrying surface which is designed, at least in certain regions, to be shaped congruently in relation to a carrying surface on the carrying periphery.

6. Supporting apparatus according to one of the preceding claims, wherein the inner support tube (13), in particular in a region of the carrying periphery (19) thereof, and the spindle nut (21) can be displaced relative to one another and transversely to the longitudinal axis (x).

7. Supporting apparatus according to one of the preceding claims, wherein the outer support tube (12) and the spindle nut (21) can be displaced relative to one another and transversely to the longitudinal axis (x).

8. Supporting apparatus according to one of the preceding claims, wherein the inside width between the inner support tube (13) and the outer support tube (12) is smaller than a maximum displacement path in a direction transverse to the longitudinal axis (x) between the spindle nut (21) and the inner support tube (13) and/or between the spindle nut (21) and outer support tube (12).

9. Supporting apparatus according to one of the preceding claims, wherein the carrying periphery (19) is formed in one piece with the inner support tube (13), and wherein the carrying periphery (19) is made by being deformed preferably from upper wall regions of the inner support tube (13).

10. Supporting apparatus according to one of Claims 1-8, wherein the carrying periphery (19) and the inner support tube (13) are of multi-part form, the carrying periphery (19) preferably being a separate element which can be positioned on the inner support tube (13).

11. Supporting apparatus according to one of the preceding claims, wherein the carrying periphery (19) has an opening which forms a carrying-periphery contour (19a) and is suitable for accommodating the spindle (20), at least in certain regions, and wherein the radial distance between the carrying-periphery contour (19a) and the longitudinal axis (x) is not constant.

12. Supporting apparatus according to one of the preceding claims, wherein the carrying periphery is inclined, at least in certain regions, in relation to the longitudinal axis (x), and wherein the inclination is preferably between 60° and 89°.

13. Method of producing a supporting apparatus, preferably for commercial vehicles such as semitrailers, **characterized by**
- providing an inner support tube (13) and an outer support tube (12), which can be displaced in relation to one another along a longitudinal axis (x) in a direction of retraction and a direction of extension (ER/AR), wherein the inner support tube (13) has a fastening region which is designed in the form of a carrying periphery (19) oriented towards the longitudinal axis (x) and is intended for securing the spindle nut (21),
- providing a spindle (20) and a spindle nut (21), which is mounted on the spindle (20), wherein the spindle nut (21) has at least one interlocking region (23), which extends transversely or radially away from the longitudinal axis (x),
- orienting the spindle nut (21) in relation to the inner support tube (13) such that the interlocking region (23) is arranged at the furthest point from the contour (19a) of the carrying periphery (19), as seen in the radial direction in relation to the longitudinal axis (x), and
- arranging the spindle nut (21) in the inner support tube (13) such that, in the case of the spindle nut (21) being rotated in relation to the inner support tube (13), the interlocking region (23) engages with the carrying periphery (19), in particular is arranged beneath the carrying periphery (19) and/or is aligned with the carrying periphery (19) in the direction of the longitudinal axis (x).

## Revendications

1. Dispositif de support, de préférence pour véhicules utilitaires tels que semi-remorques, incluant un tube intérieur de support (13) et un tube extérieur de support (12), qui peuvent être déplacés l'un par rapport à l'autre le long d'un axe longitudinal (X) dans une direction de rétraction ou respectivement une direction de déploiement (DR/DD), une broche (20) qui est agencée rotative via une zone de mécanisme (18) et stationnaire par rapport au tube extérieur de support, et un écrou à broche (21) qui est monté sur la broche (20), dans lequel l'écrou à broche (21) est immobilisé au niveau d'une zone de fixation du tube intérieur de support (13), qui est réalisée sous la forme d'une bordure porteuse (19) tournée vers l'axe longitudinal (X),
**caractérisé en ce que** la bordure porteuse (19) présente une surface porteuse, du côté de la bordure porteuse, qui est incurvée ou bombée.

2. Dispositif de support selon la revendication 1, dans lequel la courbure de la surface porteuse du côté de la bordure porteuse est dirigée vers la zone de mécanisme (18), et la courbure est réalisée de préférence au moins localement comme un bombement sphérique.

3. Dispositif de support selon l'une des revendications précédentes, dans lequel l'écrou à broche (20) comprend une bride porteuse (22) pour la transmission de la charge au tube intérieur de support (13), bride qui est agencée de préférence au-dessus de la surface porteuse du côté de la bordure porteuse.

4. Dispositif de support selon la revendication 3, dans lequel la bordure porteuse (19) est agencée entre la bride porteuse (22) et au moins une zone d'accrochage (23) de l'écrou à broche (21), qui s'étend transversalement ou radialement en éloignement de l'axe longitudinal (X).

5. Dispositif de support selon l'une des revendications 3 ou 4, dans lequel la bride porteuse (22) comprend une surface porteuse du côté de la bride, qui est réalisée au moins localement avec une forme complémentaire d'une surface porteuse du côté de la bordure porteuse.

6. Dispositif de support selon l'une des revendications précédentes, dans lequel le tube intérieur de support (13), en particulier dans la région de sa bordure porteuse (19), et l'écrou à broche (21) sont déplaçables l'un par rapport à l'autre et transversalement à l'axe longitudinal (X).

7. Dispositif de support selon l'une des revendications précédentes, dans lequel le tube extérieur de support (12) et l'écrou à broche (21) sont déplaçables l'un par rapport à l'autre et transversalement à l'axe longitudinal (X).

8. Dispositif de support selon l'une des revendications précédentes, dans lequel la largeur libre entre le tube intérieur de support (13) et le tube extérieur de support (12) est plus petite qu'un trajet de déplacement maximum transversalement à l'axe longitudinal (X) entre l'écrou à broche (21) et le tube intérieur de support (13) et/ou entre l'écrou à broche (21) et le tube extérieur de support (12).

9. Dispositif de support selon l'une des revendications précédentes, dans lequel la bordure porteuse (19) est réalisée d'une seule pièce avec le tube intérieur de support (13), et dans lequel la bordure porteuse (19) est de préférence mise en forme à partir de zones de paroi supérieure du tube intérieur de support.

10. Dispositif de support selon l'une des revendications 1 à 8, dans lequel la bordure porteuse (19) est réalisée en plusieurs pièces avec le tube intérieur de support (13) et est de préférence un élément séparé susceptible d'être posé sur le tube intérieur de support (13).

11. Dispositif de support selon l'une des revendications précédentes, dans lequel la bordure porteuse (19) comporte une ouverture qui définit un contour (19a) de la bordure porteuse et qui convient à recevoir au moins localement la broche (20), et dans lequel la distance radiale du contour (19a) de la bordure porteuse à l'axe longitudinal (X) est réalisée non constante.

12. Dispositif de support selon l'une des revendications précédentes, dans lequel la bordure porteuse est réalisée au moins localement de manière inclinée par rapport à l'axe longitudinal (X), et dans lequel l'inclinaison est de préférence entre 60° et 89°.

13. Procédé pour la fabrication d'un dispositif de support, de préférence pour véhicules utilitaires tels que semi-remorques,
**caractérisé par** les étapes consistant à :
- préparer un tube intérieur de support (13) et un tube extérieur de support (12), qui sont déplaçables l'un par rapport à l'autre le long d'un axe longitudinal (X) dans une direction de rétraction ou respectivement une direction de déploiement (DR/DD), dans lequel le tube intérieur de soutien (13) comprend une zone de fixation, réalisée sous forme d'une bordure porteuse (19) tournée vers l'axe longitudinal (X), pour l'immobilisation de l'écrou à broche (21),
- préparer une broche (20) et un écrou à broche (21) qui est monté sur la broche (20), l'écrou à broche (21) comprenant au moins une zone d'accrochage (23) qui s'étend transversalement ou radialement en éloignement de l'axe longitudinal (X),
- orienter l'écrou à broche (21) par rapport au tube intérieur de soutien (13) de telle façon que la zone d'accrochage (23) est agencée au plus loin en direction radiale par rapport à l'axe longitudinal (X) depuis le contour (19a) de la bordure porteuse (19),
- agencer l'écrou à broche (21) dans le tube intérieur de support (13) de telle manière que lors d'une rotation de l'écrou à broche (21) par rapport au tube intérieur de support (13) la zone d'accrochage (23) vient en engagement avec la bordure porteuse (19), est agencée en particulier au-dessous de la bordure porteuse (19) ou est en alignement avec la bordure porteuse (19) en direction de l'axe longitudinal (X).
